Europäisches Patentamt

European Patent Office

Office européen des brevets

(11) Veröffentlichungsnummer: **0 211 419**
**A2**

(12) **EUROPÄISCHE PATENTANMELDUNG**

(21) Anmeldenummer: 86110666.4

(22) Anmeldetag: 01.08.86

(51) Int. Cl.⁴: **F 02 M 31/00**

(30) Priorität: 06.08.85 DE 3528111

(43) Veröffentlichungstag der Anmeldung:
25.02.87 Patentblatt 87/9

(84) Benannte Vertragsstaaten:
DE FR GB IT

(71) Anmelder: BAYERISCHE MOTOREN WERKE
Aktiengesellschaft
Postfach 40 02 40 Petuelring 130
D-8000 München 40(DE)

(72) Erfinder: Konitzer, Hansjörg
Alleestrasse 8 a
D-8044 Lehhof(DE)

(74) Vertreter: Bücken, Helmut
Bayerische Motoren Werke Aktiengesellschaft Postfach
40 02 40 Petuelring 130 - AJ-30
D-8000 München 40(DE)

(54) Wärmetauschvorrichtung für den Kraftstoff einer Brennkraftmaschine.

(57) Bei einer Wärmetauschvorrichtung für den Kraftstoff einer Brennkraftmaschine wird zur Erzielung einer von aufwendigen Anlagen unabhängig wirksamen Wärmetauschvorrichtung für den Kraftstoff einer Brennkraftmaschine vorgeschlagen, hierfür ein Wärmerohr zu verwenden. Das Wärmerohr kann in einer Vorrichtung zum Kühlen des Kraftstoffes und in einer anderen Vorrichtung zum Anwärmen des Kraftstoffes dienen.

Croydon Printing Company Ltd.

Die Erfindung bezieht sich auf eine Wärmetauschvorrichtung für den Kraftstoff einer Brennkraftmaschine.

Im Hinblick auf den im Kraftverkehr zunehmenden Einsatz von Kraftstoffen mit neuen, leichtflüchtigen und damit die Umwelt belastenden Zusatzstoffen anstelle bisheriger, z. B. als Klopfbremsen dienender Additive, gewinnt die Kraftstoffkühlung stärker an Bedeutung. Für eine wirksame Kühlung des Kraftstoffes wird bei den bekannten Vorschlägen (z. B. DE-A 32 31 881) überwiegend eine im Kraftfahrzeug installierte, insbesondere der Temperaturregelung im Fahrgastraum dienende Klimaanlage vorausgesetzt. Aus der DE-A 32 14 874 ist aber auch eine ausschließlich der Kraftstoffkühlung dienende Klimaanlage bekannt, die nach dem Absorptions-Prinzip arbeitet.

Klimaanlagen mit Kompressions- oder Absorptions-Kältemaschinen sind geräteaufwendig und damit teuer, ferner ist der Platzbedarf erheblich.

Der Erfindung liegt die Aufgabe zugrunde, eine von aufwendigen Anlagen unabhängig wirksame Wärmetauschvorrichtung für den Kraftstoff einer Brennkraftmaschine aufzuzeigen.

Gelöst wird diese Aufgabe in überraschend einfacher Weise durch Verwendung eines Wärmerohres (Wärmeleitrohr, heat-pipe).

Ein Wärmerohr stellt durch seinen einfachen Aufbau eine in einem Kraftfahrzeug leicht unterzubringende Wärmetauschvorrichtung dar, die in einem Fall zur Kühlung und in einem anderen Fall zur Aufwärmung von bei tiefen Temperaturen zähflüssig werdendem Kraftstoff dient.

Mit den Merkmalen des Anspruches 3 ist eine vorteilhaft einfache Ausgestaltung des Wärmerohres als Kühlvorrichtung für den Kraftstoff angegeben.

Diese einfache Ausgestaltung ermöglicht bei Verwendung des Wärmerohres als Kühlvorrichtung in einem Kraftfahrzeug eine der in diesem für unterschiedliche Zwecke vorhandenen Luftführungen sinnvoll zu nutzen. So kann der Luft-Wärmetauscher des Wärmerohres in der Lüftführung zum Kühler einer flüssigkeitsgekühlten Brennkraftmaschine angeordnet sein, wobei ein Gebläse, insbesondere ein zusätzliches, mehrstufiges und evtl. temperaturabhängig gesteuertes Gebläse die Kühlwirkung verstärkt. Soll dagegen das Wärmerohr nicht nur mit seinem Betriebsstoff-Kühler, sondern auch mit seinem Luft-Wärmetauscher in einer bei einem Crash weniger gefährdenden Zone liegen, bietet sich hierfür der Frischluftkanal der Belüftungsanlage des Kraftfahrzeuges für die Anordnung des Luft-Wärmetauschers des Wärmerohres an. Wird der Betriebsstoff-Kühler des Wärmerohres im Heck des Kraftfahrzeuges im Kraftstoffbehälter, am Eingang einer Vorförderpumpe oder in der Rücklaufleitung vorgesehen, kann zur Erzielung eines kurzen Wärmerohres dessen Luft-Wärmetauscher in einem Abluftkanal des Fahrgastraumes angeordnet werden. Ist schließlich ein Kraftfahrzeug mit einer bekannten Klimaanlage ausgerüstet, kann die Wirkung des Wärmerohres durch Anordnung seines Luft-Wärmetauschers in einer Klima-Luftführung gesteigert werden.

3

Wie aus dem Vorstehenden hervorgeht, kann der Betriebsstoff-Kühler des Wärmerohres an jeder beliebigen Stelle der Versorgungseinrichtung angeordnet werden. Dies ergibt unter anderem den Vorteil, daß Kraftstoffleitungen nicht in crash-gefährdete Bereiche des Kraftfahrzeuges verlängert werden müssen. Die notwendige Distanz zwischen Betriebsstoff-Kühler und Luft-Wärmetauscher wird durch das Wärmerohr überbrückt, das insbesondere bei einem Verlauf durch wärmeintensive Bereiche des Kraftfahrzeuges wärmeisoliert ist. Ist der Kraftstoff kälter als die über den Luft-Wärmetauscher geführte Luft, wirkt das Wärmerohr nicht, es liegt somit ein selbstregelndes System vor. In diesem Sinne ist auch die Wahl des Luft-Wärmetauschers am wärmeabführenden Endbereich des Wärmerohres zu sehen. Die Wärmeabfuhr in ein flüssiges oder dampfförmiges Medium würde nämlich eine in Aufbau und Anordnung aufwendigere Vorrichtung bedeuten. Ein Wärmerohr mit einem Luft-Wärmetauscher ist auch als Nachrüstteil einfacher herzustellen und leichter im Kraftfahrzeug anzubringen.

Die Zeichnung zeigt in

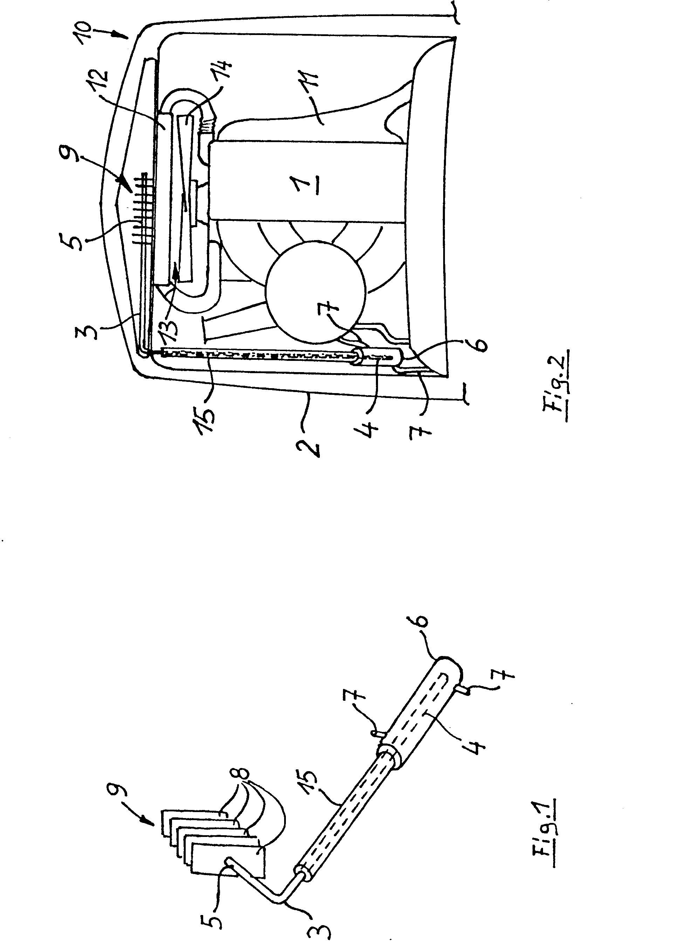

Fig. 1    ein Ausführungsbeispiel eines Wärmerohres für die Kraftstoffkühlung in einem Kraftfahrzeug, und

Fig. 2    schematisch die Anordnung des Wärmerohres nach Fig. 1 im Vorderwagen eines Kraftfahrzeuges.

Eine nicht näher dargestellte Kraftstoffanlage für eine Brennkraftmaschine 1 in einem Kraftfahrzeug 2 ist mit einem Wärmerohr 3 zur Kühlung des Kraftstoffes ausgerüstet.

Das Wärmerohr 3 ist in bekannter Weise ein abgeschlossenes System mit einer unter geringem Druck stehenden Flüssigkeit, die in einem Endbereich 4 des Wärmerohres 3 durch Wärmeaufnahme verdampft und im anderen Endbereich 5 durch Wärmeabfuhr kondensiert. Die kondensierte Flüssigkeit wird aus der Kondensationszone 5 über eine am Innenumfang des Wärmerohres angeordnete Kapillarstruktur wieder der Verdampfungszone 4 zugeführt.

Entsprechend der vorbeschriebenen Wirkungsweise ist das Wärmerohr 3 in der Verdampfungszone 4 von einer Kammer 6 umschlossen, die in einer Rücklaufleitung 7 der Kraftstoffanlage angeordnet ist. Zur Verbesserung des Wärmeüberganges können am Außenumfang des Wärmerohres 3 im Bereich der Verdampfungszone zusätzliche Wärmetauschflächen vorgesehen sein.

In dem der Kondensationszone 5 entsprechenden Endbereich ist das Wärmerohr 3 zur raschen Wärmeabfuhr mit großflächigen Lamellen 8 ausgerüstet, die insgesamt einen Luft-Wärmetauscher 9 bilden.

Bei einer im Vorderwagen 10 eines Kraftfahrzeuges 2 angeordneten Brennkraftmaschine 1 wird das Wärmerohr 3 auf der von der Abgasanlage 11 der Brennkraftmaschine 1 abgewandten Seite angeordnet, wobei die für die Kraftstoffkühlung vorgesehene Kammer 6 in einem relativ crash-sicheren Bereich des Vorderwagens 10 angeordnet ist. Durch eine entsprechend lange Ausführung des Wärmerohres 3 können dabei in crash-gefährdeten Zonen verlegte Kraftstoffleitungen vermieden werden.

Das Wärmerohr 3 erstreckt sich in etwa über die Länge des Vorderwagens 10 und ist nach einer Abwinkelung mit dem Luft-Wärmetauscher 9 vor die Stirnfläche des Kühlers 12 für die flüssigkeitsgekühlte Brennkraftmaschine 1 geführt. Hinter dem Kühler 12 ist in einer Luftführung 13 ein Lüfter 14 der Brennkraftmaschine 1 angeordnet.

Durch ein zusätzliches Gebläse (nicht gezeigt), insbesondere mehrstufig und/oder temperaturabhängig zuschaltbar, kann die Kühlwirkung des Wärmerohres 3 gesteigert werden. Dem dient auch eine Isolierung 15 für den im Vorderwagen 10 der Brennkraftmaschine 1 benachbart verlaufenden Teil des Wärmerohres 3.

Der Luft-Wärmetauscher kann auch in einem Luftkanal für die Zufuhr von Frischluft und/oder Umluft zum Heiz-/Klima-Gerät oder schließlich in einem Luftkanal für die Abfuhr von Luft aus dem Fahrgast-Innenraum angeordnet sein.

Das Wärmerohr kann jedoch in einer Kraftstoffanlage auch als Wärmevorrichtung dienen. Diese Verwendungsart ist vorteilhaft bei einem Kraftstoff, der mit tieferen Temperaturen zähflüssiger wird. Um die Versorgung einer Brennkraftmaschine in einem Kraftfahrzeug mit einem derartigen Kraftstoff bei tiefen Temperaturen während der Fahrt sicherzustellen, kann das Wärmerohr mit seiner Kondensationszone im Kraftstofftank nahe der Vorförderpumpe angeordnet sein. Über die Kondensationszone des Wärmerohres wird Wärme an den Kraftstoff abgegeben, diese Wärme ist aus der Verdampferzone des Wärmerohres herangeführt, wobei die Verdampferzone des Wärmerohres mit einer Wärmequelle der Brennkraftmaschine oder des Fahrzeuges in Verbindung steht. Als Wärmequelle können ein flüssiges Kühlmittel der Brennkraftmaschine und/oder die Abgase bzw. die Abgasleitung der Brennkraftmaschine dienen. Die vorbeschriebene Verwendung des Wärmerohres ist insbesondere bei Dieselkraftstoffen vorteilhaft.

1

Patentansprüche

1. Wärmetauschvorrichtung für den Kraftstoff einer Brennkraftmaschine, gekennzeichnet durch die Verwendung eines Wärmerohres (Wärmeleitrohr, heat-pipe 3).

2. Wärmetauschvorrichtung nach Anspruch 1, dadurch gekennzeichnet, daß das Wärmerohr (3) als Kühlvorrichtung dient.

3. Einrichtung nach Anspruch 2, die zwischen einem Vorratsbehältnis für den Kraftstoff und der Brennkraftmaschine eine Vorlaufleitung und eine Rücklaufleitung umfaßt, dadurch gekennzeichnet,
   - daß das Wärmerohr (3) mit seinem als Kraftstoff-Kühler dienenden Endbereich (Verdampferzone 4) in einer vom Kraftstoff durchströmten Kammer (6) angeordnet ist und
   - im anderen Endbereich (Kondensationszone 5) ein Luft-Wärmetauscher (9) angeordnet ist.

4. Einrichtung nach Anspruch 3, für eine in einem Kraftfahrzeug (2) angeordnete Brennnkraftmaschine (1), dadurch gekennzeichnet, daß der Luft-Wärmetauscher (9) des Wärmerohres (3) in einer am Kraftfahrzeug (2) ausgebildeten Luftführung (Kühlluftführung 13, Frisch-, Klima-, Ab-Luftführung) angeordnet ist.

2

5. Wärmetauschvorrichtung nach Anspruch 1, dadurch gekennzeichnet, daß das Wärmerohr als Wärmevorrichtung dient.

6. Wärmetauschvorrichtung nach Anspruch 5, dadurch gekennzeichnet,
   - daß das Wärmerohr mit seiner Kondensationszone in einem Kraftstofftank angeordnet ist, und
   - seine Verdampferzone mit einer Wärmequelle an der Brennkraftmaschine oder am Fahrzeug in Verbindung steht.

Fig.1

Fig.2